Europäisches Patentamt

**European Patent Office**

Office européen des brevets

(11) Veröffentlichungsnummer: **0 111 057**
**B1**

(12) **EUROPÄISCHE PATENTSCHRIFT**

(45) Veröffentlichungstag der Patentschrift:
20.05.87

(51) Int. Cl.⁴: **B 23 K 31/06**

(21) Anmeldenummer: **83108667.3**

(22) Anmeldetag: **02.09.83**

(54) **Verfahren und Vorrichtung zur Herstellung eines Rohrkrümmers aus Stahl.**

(30) Priorität: **08.12.82 DE 3245401**

(43) Veröffentlichungstag der Anmeldung:
**20.06.84 Patentblatt 84/25**

(45) Bekanntmachung des Hinweises auf die Patenterteilung:
**20.05.87 Patentblatt 87/21**

(84) Benannte Vertragsstaaten:
**DE FR GB IT NL SE**

(56) Entgegenhaltungen:
**DE-A-2 629 571**
**DE-B-2 400 916**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Million, Karl, Dr. Ing., Beerenstrasse 40, D-4200 Oberhausen 11 (DE)**
Erfinder: **Zimmermann, Horst, Genterstrasse 111, D-4200 Oberhausen 14 (DE)**

## Beschreibung

Die Erfindung betrifft ein Verfahren zur Herstellung eines Rohrkrümmers aus Stahl, insbesondere für Hauptkühlmittelleitungen in Kernreaktoranlagen, bei dem die Wand des Krümmers durch formgebendes Auftragschweißen mit um eine vertikale Achse rotierenden Schweißköpfen unter Kühlung der Schweißzone aufgebaut wird.

Das formgebende Auftragschweißen wird für die Herstellung großer und qualitativ hochwertiger Werkstücke in zunehmendem Umfang insbesondere zur Herstellung von Kernreaktorkomponenten angewandt. So ist aus der DE-A1- 26 29 571 ein Verfahren zum Herstellen von Halbtorusschalen bekannt. Bei der Vorrichtung gemäß dieser Druckschrift rotiert und schwenkt das Werkstück. Der Schweißkopf ist schwenkbar. Um aus den mit dieser Vorrichtung hergestellten Halbtorusschalen Rohrkrümer zu fertigen, müssen zwei ringförmige Halbtorusschalen durch Längsnähte verschweißt und der dadurch entstehende Torus in Sektoren zerlegt werden. Die Schweißbewegung findet in einer Ebene statt, die senkrecht zur Torusachse liegt.

Obwohl die geschweißten Halbtorusschalen hinsichtlich Gefügebau, Festigkeitseigenschaften und Fertigungsaufwand gegenüber gegossenen oder geschmiedeten Halbtorusschalen Vorteile aufweisen, sind die beim Zusammenbau zu einem Krümmer nach wie vor notwendigen Längsschweißnähte als nachteilig anzusehen. Ein weiterer Nachteil besteht darin, daß bei dem bekannten Verfahren nur ein Schweißkopf eingesetzt werden kann, was eine gleichzeitige, in vielen Fällen erforderliche Innenplattierung der Krümmerwand ausschließt.

Ferner ist es für das Aufbauschweißen bekannt, Schweißköpfe einzusetzen, die um eine vertikale Achse drehbar sind (DE-AS 24 00 916).

Der Erfindung liegt die Aufgabe zugrunde, ein Verfahren zur Herstellung von Torussektoren, d.h. kompletten Rohrkrümmern durch formgebendes Auftragschweißen zu schaffen, mit dem der Krümmer in einteiliger Ausführung und mit einer Innenplattierung versehen hergestellt werden kann. Eine weitere Aufgabe besteht darin, eine Vorrichtung zur Durchführung des vorgeschlagenen Verfahrens zu schaffen.

Die Lösung der Aufgabe erfolgt mit den in den Ansprüchen 1-7 beschriebenen Merkmalen und Verfahrensschritten.

Bei der Vielzahl der nacheinander geschweißten Krümmerabschnitte ergibt der Übergang von einem Abschnitt zum folgenden eine ausreichende Oberflächengüte des Innendurchmessers. Der notwendige Ausgleich des Höhenunterschiedes eines Krümmerabschnitts, der sich ergibt aus dem spitzen Winkel der Krümmerabschnitte, den diese in bezug auf die Drehachse bilden, ist im Unteranspruch 2 beschrieben. Danach kann die auf jeder Seite über den halben Umfang des Krümmerabschnitts stetig anwachsende Höhe entweder mittels zusötzlicher Schweißraupen abschnittweise auf der Kreisringfläche aufgebaut werden oder durch eine ständige Erhöhung der Abschmelzleistung, die durch eine kontinuierliche Veränderung der Schweißgeschwindigkeit bzw. der Stromstärke gesteuert werden kann. Nach Fertigstellung der Außenwand des Krümmerabschnitts, die aus einem ferritischen Werkstoff bestehen kann, wird mittels eines zweiten Schweißkopfes die Innenplattierung aufgetragen. Diese besteht zweckmäßg aus zwei einander überlappende Schweißraupen eines austenitischen Werkstoffes. Nunmehr wird zum Aufbau des folgenden Krümmerabschnitts der in Grundstellung waagerecht liegende, auf einer Schwenkplatte befestigte Basisring mit dem fertigen Krümmerabschnitt von einer Schwenkeinrichtung um den Winkel eines Krümerabschnitts nach unten geschwenkt. Die Schweißebene liegt, jetzt wieder in der Ebene der Drehachse. Zweckmäßig erfolgt die Schwenkbewegung der Schwenkplatte entsprechend dem fortschreitenden Aufbau der Krümmerwand mittels einer Programmsteuerung.

Zur Erzielung eines einwandfreien Gefügeaufbaus innerhalb der Wand bei optimaler Schweißgeschwindigkeit ist bekannt, die Schweißzone zu kühlen. Dabei ist es zweckmäßig, zur Kühlung des aufgetragenen Werkstoffes Kohlendioxyd zu verwenden. Das hat den Vorteil, daß evtl. im Schweißgut vorhandener Wasserstoff reduziert wird. Eine besonders intensive Kühlwirkung kann erzielt werden, wenn als Kühlmittel Kohlendioxyd in festem Zustand verwendet wird. Vorteilhafte physikalisch-metallurgische Effekte können erzielt werden, wenn zur Abkühlung des Schweißgutes unmittelbar nach dem Auftragen Schweißpulver verwendet wird, dem Kohlendioxyd in festem Zustand beigemengt ist.

Die Durchführung des erfindungsgemäßen Verfahrens erfolgt mit einer Vorrichtung nach Anspruch 8, die aus einer Schweißanlage, einer Schwenkeinrichtung und einer Steuereinrichtung besteht. Die Schweißanlage besteht im wesentlichen aus um eine vertikale Achse rotierenden, an Auslegern beweglich angeordneten Schweißköpfen mit Elektrodenhalterung und Elektrodenzuführungen sowie einer Kühlmittelzuführeinrichtung. Die Schwenkeinrichtung umfaßt ein Antriebsaggregat mit Gegenhalter, eine Schwenkplatte und einen darauf angeordneten Basisring. Mit der Steuereinrichtung werden die Umlaufgeschwindigkeit der Schweißköpfe, das Aufbringen des Schweißgutes und die Schwenkbewegungen gesteuert. Vorteilhaft kann eine numerische Steuerung eingesetzt werden.

Ein nach vorliegender Erfindung hergestellter Rohrkrümmer weist die Vorteile auf, daß seine Wandung eine gleichmäßige Gefügestruktur besitzt, da keine Längsschweißnähte erforderlich sind, und daß eine korrosionsbeständige Innenplattierung während der Herstellung mit aufgebracht werden kann.

Die Vorrichtung zur Durchführung des Verfahrens ist in der Zeichnung schematisch dargestellt und nachfolgend näher beschrieben. Es zeigen:

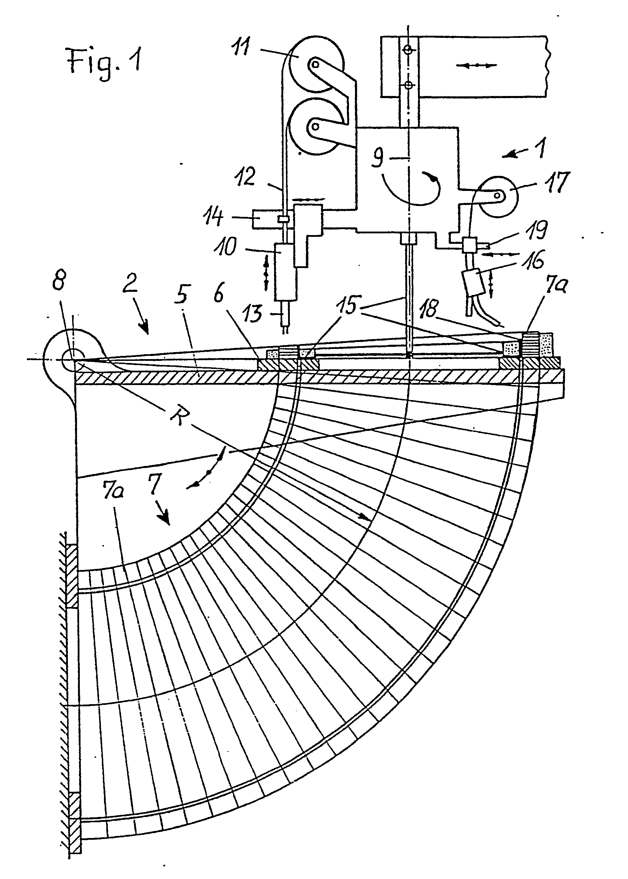

Fig. 1 die Vorrichtung mit Schweißanlage, Schwenkeinrichtung und dem Profil eines Krümmers

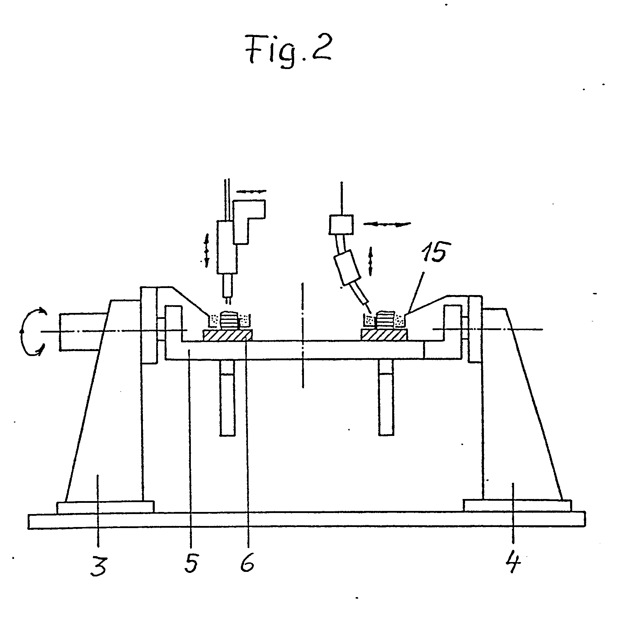

Fig. 2 eine Ansicht der Schwenkeinrichtung.

Die Vorrichtung umfaßt die vertikal angeordnete, der Lage des Werkstückes anpaßbare Schweißanlage 1, die Schwenkeinrichtung 2 und die nicht gezeichnete Steuereinrichtung. Die Schwenkeinrichtung 2 besteht aus dem Antriebsaggregat 3 mit Gegenhalter 4, der Schwenkplatte 5 und dem Basisring 6. Der Aufbau des Krümmers 7 erfolgt auf dem in Grundstellung waagerecht liegenden Basisring 6, der mit seiner Mittelachse im Abstand des Krümmerradius R von der Drehachse 8 des Antriebsaggregates 3 auf der Schwenkplatte 5 angeordnet ist. Die Schweißanlage 1 ist mit ihrer vertikalen Achse 9 im Abstand R von der Drehachse 8 oberhalb des Basisringes 6 angeordnet. Die Wand des Krümmers 7 wird nacheinander aus einer Vielzahl von Krümmerabschnitten 7a aufgebaut. Der Aufbau jedes Krümmerabschnitts 7a erfolgt durch den Schweißkopf 10, der mit den Elektrodenzuführungen 11 um die vertikale Achse 9 mit der Schweißgeschwindigkeit rotiert. Im Schweißkopf 10 sind die Elektroden 12 mittels Elektrodenhaltern 13 angeordnet. Der Schweißkopf 10 ist am Ausleger 14 radial beweglich gelagert. Beim Aufbau der Wand erfolgt nach jedem Umlauf des Schweißkopfes 10 eine radiale Verschiebung um annähernd eine Schweißraupenbreite. Somit kann jede beliebige Wandstärke des Krümmers 7 erzeugt werden. Nach Auftrag einer vollständigen Lage schwenkt die Schwenkplatte 5 um die Lagendicke nach unten. Der Höhenunterschied jedes Krümmerabschnitts 7a zwischen dem kürzesten und weitesten Abstand von der Drehachse 8 wird durch zusätzliches Aufbringen von Schweißgut ausgeglichen. Für die Anwendung der Unterpulvertechnik ist auf dem Umfang des Krümmerabschnitts eine Pulverhalterung 15 vorgesehen, die bei fortschreitendem Aufbau des Krümmers nicht mit der Schwenkplatte 5 abgesenkt wird.

Nachdem die Wand des Krümmerabschnitts 7a eine bestimmte Höhe erreicht hat, spätestens nach Fertigstellung der Abschnittswand, wird mittels des Schweißkopfes 16, der über die Elektrodenzuführung 17 mit Elektroden versorgt wird, auf der Innenseite des Krümmerabschnitts eine Plattierung 18 aufgetragen, die aus einem austenitischen Werkstoff bestehen kann. Der Schweißkopf 16 ist am Ausleger 19 axial und radial beweglich gelagert. Damit kann nacheinander von unten nach oben eine mehrlagige Plattierung aufgetragen werden.

Nachdem der Krümmerabschnitt 7a fertig geschweißt ist, wird die Schwenkplatte 5 um die Drehachse 8 mit dem Winkel des Krümmerabschnitts nach unten geschwenkt, so daß jetzt die obere Schweißebene des fertigen Krümmerabschnitts in der Horizontalebene der Drehachse 8 liegt. Nunmehr kann der folgende Krümmerabschnitt geschweißt werden. Bei der Herstellung eines 90°-Krümmers wiederholt sich der Schwenkvorgang so oft, bis der den Krümmer tragende Basisring 6 senkrecht unter der Drehachse 8 steht.

Zur Erhöhung der aufgebrachten Schweißgutmenge pro Umlauf kann die vertikal angeordnete Schweißanlage 1 umfangsseitig mit mehreren Schweißköpfen 10 ausgerüstet und jeder Schweißzone eine Kühlmittelzufuhr zugeordnet werden.

**Patentansprüche**

1. Verfahren zur Herstellung eines Rohrkrümmers (7) aus Stahl, insbesondere für Hauptkühlmittelleitungen in Kernreaktoranlagen, bei dem die Wand des Krümmers (7) durch formgebendes Auftragschweißen mit um eine vertikale Achse rotierenden Schweißköpfen (10) unter Kühlung der Schweißzone aufgebaut wird, wobei die Wand des Krümmers (7) aus einer Vielzahl von Krümmerabschnitten (7a) gebildet wird, und von einem Basisring (6) getragen wird, der auf einer Schwenkplatte (5) befestigt ist, die von der waagerechten bis zur senkrechten Ebene schwenkbar ist, und der Höhenunterschied jedes Krümmerabschnitts (7a) zwischen dem kürzesten und weitesten Abstand von der Drehachse (8) durch zusätzlichen Schweißgutauftrag ausgeglichen wird und nachfolgend auf die Innenwand des Krümmerabschnitts (7a) eine Plattierung (18) aufgebracht wird.

2. Verfahren nach Anspruch 1, dadurch gekennzeichnet, daß der Ausgleich des Höhenunterschiedes der Krümmerabschnitte (7a) durch Auftrag zusätzlicher Schweißraupen in einzelnen Schweißbereichen oder durch programmgesteuerte Änderung der Lagendicke während des Umlaufs der Schweißköpfe (10, 16) erfolgt.

3. Verfahren nach den Ansprüchen 1 und 2, dadurch gekennzeichnet, daß die Schwenkbewegung der Schwenkplatte (5) entsprechend dem fortschreitenden Aufbau der Krümmerwand mittels Programmsteuerung erfolgt.

4. Verfahren nach den Ansprüchen 1 bis 3, dadurch gekennzeichnet, daß die Krümmerwand aus ferritischem Werkstoff und die Innenplattierung aus austenitischem Werkstoff besteht.

5. Verfahren nach den Ansprüchen 1 bis 4, dadurch gekennzeichnet, daß zur Kühlung des aufgetragenen Schweißguts Kohlendioxyd verwendet wird.

6. Verfahren nach Anspruch 5,

dadurch gekennzeichnet,
daß als Kühlmittel Kohlendioxyd in festem Zustand verwendet wird.

7. Verfahren nach den Ansprüchen 5 und 6, dadurch gekennzeichnet,
daß Kohlendioxyd in festem Zustand dem Schweißpulver wird.

8. Vorrichtung zur Durchführung des Verfahrens nach den Ansprüchen 1 bis 7, bestehend aus einer Schweißanlage (1) mit Schweißkopf (10, 16), Elektrodenhalterung (13), Elektrodenzuführung (11, 17), Kühlmitteleinrichtung, einer Schwenkeinrichtung (2) und einer Steuereinrichtung,
dadurch gekennzeichnet,
daß die Schweißanlage (1) aus um eine vertikale Achse (9) rotierenden, an Auslegern (14, 19) beweglich angeordneten Schweißköpfen (10, 16) mit Elektrodenhalterung (13) und Elektrodenzuführung (11, 17) sowie einer Kühlmittelzuführeinrichtung besteht und kombiniert ist mit einer Schwenkeinrichtung (2), wobei diese ein Schwenkantriebsaggregat (3) mit Gegenhalter (4), eine Schwenkplatte (5) und einen darauf angeordneten Basisring (6) umfaßt, und die Steuereinrichtung die Umlaufgeschwindigkeit der Schweißköpfe (10, 16), das Aufbringen des Schweißgutes und die Schwenkbewegungen steuert.

## Claims

1. Method of producing a pipe bend (7) from steel, particularly for main coolant lines in nuclear reactor plants, wherein the wall of the bend (7) is built up by a shaping build-up welding process employing welding heads (10) which rotate about a vertical axis, the welding zone being cooled, the wall of the bend (7) being formed from a plurality of bend portions (7a), and being supported by a base ring (6) which is fixed on a pivot plate (5) pivotable from the horizontal into the vertical plane, the difference in heights of each bend portion (7a) between the shortest and farthest distance from the axis of rotation (8) being compensated by additional application of weld material, a plating (18) being subsequently applied to the inside wall of the bend portion (7a).

2. Method according to Claim 1, characterised in that compensation for the difference in heights of the bend portions (7a) is achieved by the application of additional weld beads in individual welding zones or by programme controlled variation of the thickness of the layers during rotation of the welding heads (10, 16).

3. Method according to Claims 1 and 2, characterised in that the pivoting movement of the pivoting plate (5) occurs by a programme control arrangement according to the progressive build-up of the bend wall.

4. Method according to Claims 1 to 3, characterised in that the bend wall consists of ferritic material, the inner plating consisting of austenitic material.

5. Method according to Claims 1 to 4, characterised in that carbon dioxide is used for cooling the applied weld material.

6. Method according to Claim 5, characterised in that carbon dioxide in the solid state is used as the coolant.

7. Method according to Claims 5 and 6, characterised in that carbon dioxide in the solid state is admixed with the welding powder.

8. An apparatus for carrying out the method according to Claims 1 to 7, consisting or a welding installation (1) with welding head (10, 16), elektrode holder (13), electrode feed (11, 17), coolant means pivoting arrangement (2) and control arrangement, characterised in that the welding installation (1) consists of welding heads (10, 16) disposed movably on jibs (14, 19) and rotating about a vertical axis (9) and comprising electrode holder (13) and electrode feed (11, 17) and also a coolant feed means, the welding installation being combined with a pivoting means (2), this latter comprising a pivot drive assembly (3) with a steadying support (4), a pivoting plate (5) and disposed thereon a base ring (6), the control means controlling the speed of revolution of the welding heads (10, 16), the application of weld material and of the pivoting movements.

## Revendications

1.- Procédé pour fabriquer un coude de tube (7) en acier, notamment pour des canalisations de fluide de refroidissement principales dans des installations de réacteurs nucléaires, procédé dans lequel la paroi du coude (7) est constituée par soudage de rechargement et de mise en forme avec des têtes de soudage (10) tournant autour d'un axe vertical, et avec refroidissement de la zone de soudage, la paroi du coude (7) étant constituée d'une pluralité de tronçons de coude (7a), et étant portée par un anneau de base (6), qui est fixé sur une plaque pivotante (5), susceptible de pivoter du plan horizontal jusqu'au plan vertical, et la différence de hauteur de chaque tronçon de coude (7a) entre la distance la plus courte et la distance la plus grande de l'axe de rotation (8) étant compensée par un apport supplémentaire de soudure, tandis qu'ensuite, un placage (18) est rapporté sur la paroi interne du tronçon de coude (7a).

2.- Procédé selon la revendication 1, caractérisé en ce que la compensation de la différence de hauteur des tronçons de coude (7a) est obtenue par superposition de passes ds soudage supplémentaires sur des zones de soudure individuelles ou bien par modification programmée de l'épaisseur de la couche pendant la résolution des têtes de soudure (10, 16).

3.- Procédé selon les revendications 1 et 2, caractérisé en ce que le mouvement de pivotement de la plaque pivotante (5), de façon correspondante à la constitution progressive de la paroi du coude, est obtenu par commande programmée.

4.- Procédé selon les revendications 1 à 3, caractérisé en ce que la paroi du coude est constituée d'un matériau ferritique, tandis que le placage interne est constitué d'un matériau austénitique.

5.- Procédé selon les revendications 1 à 4 caractérisé en ce qu on utilise du bi-oxyde de carbone pour refroidir la soudure de rechargement.

6.- Procédé selon la revendication 5 caractérisé en ce qu on utilise comme moyen de refroidissement, du bi-oxyde de carbone à l'état solide.

7.- Procédé selon les revendications 5 et 6, caractérisé en ce que le bi-oxyde de carbone est mélangé à l'état solide à la poudre de soudure.

8.- Dispositif pour la mise en oeuvre du procédé selon les revendications 1 à 7, dispositif constitué par une installation de soudage (1) avec des têtes de soudage (10, 16), par un support d'électrodes (13), par une alimentation en électrodes (11, 17), par une installation pour le moyen de refroidissement, par un moyen de pivotement (2) et par une installation de commande, dispositif caractérisé en ce que l'installation de soudage (1) est constituée par des têtes de soudage (10, 16) disposées de façon mobile sur des consoles (14, 19) et tournant autour d'un axe vertical (9), avec un support d'électrodes (13) et une alimentation en électrodes (11, 17) ainsi qu'avec un moyen d'alimentation en produits de refroidissement, et cette installation est combinée avec un moyen de pivotement (2), celui-ci comprenant un équipement d'entraînement en pivotement (3) avec un support antagoniste (4), une plaque pivotante (5) et un anneau de base (6) disposé sur cette plaque, tandis que le dispositif de commande contrôle la vitesse de révolution des têtes de soudage (10, 16), le dépôt de soudure, et les déplacements de pivotement.

Fig. 1

# Fig.2